# EUROPÄISCHE PATENTANMELDUNG

(11) **EP 4 592 070 A1**
(43) Veröffentlichungstag der Anmeldung: **30.07.2025**
(21) Anmeldenummer: 25151004.6
(22) Anmeldetag: 09.01.2025
(51) Int. Cl.: B29D 30/06, B29D 30/72

(54) **VULKANISATIONSFORM FÜR EINEN ZWEIRADREIFEN UND EINSATZ ZUM EINSETZEN IN EINE SEITENWANDSCHALE EINER VULKANISATIONSFORM FÜR EINEN ZWEIRADREIFEN**

(30) Priorität: 26.01.2024 DE 102024200699
(71) Anmelder: Continental Reifen Deutschland GmbH, 30175 Hannover (DE)
(72) Erfinder: Sudikatis, Florian, 30175 Hannover (DE)
(74) Vertreter: Continental Corporation

(57) **Zusammenfassung**

Vulkanisationsform für einen Zweiradreifen, insbesondere einen Fahrradreifen oder ein E-Bike und Reifen für Fahrzeuge der Klassen L1e-A und L1e-B, mit zumindest einer in Draufsicht kreisringförmigen Seitenwandschale (1), deren Formfläche (3) eine Seitenwand des zu vulkanisierenden Reifens formt und welche mit zumindest einer konzentrisch zum Kreisring der Seitenwandschale (1) als Kreisringabschnitt ausgebildeten Aussparung versehen ist, in die ein zur Aussparung komplementär ausgebildeter Einsatz (4) auswechselbar und derart eingesetzt ist, dass er eine mit der Formfläche (3) einheitliche Basisfläche (5) aufweist, auf welcher als Vertiefungen oder Erhebungen ausgebildete Zeichen eingebracht sind, die auf die Seitenwand übertragbar sind.

Die Aussparung und der Einsatz (4) weisen eine konstante Breite von 5,00 mm 35,00 mm, insbesondere von 7,00 mm bis 15,00 mm, und eine derartige Erstreckungslänge auf, dass sie über einen Zentriwinkel (α) von 60° bis 170° der Seitenwandschale (1) verlaufen.

## Beschreibung

Die Erfindung betrifft eine Vulkanisationsform für einen Zweiradreifen, insbesondere einen Fahrradreifen oder ein E-Bike und Reifen für Fahrzeuge der Klassen L1e-A und L1e-B, mit zumindest einer in Draufsicht kreisringförmigen Seitenwandschale, deren Formfläche eine Seitenwand des zu vulkanisierenden Reifens formt und welche mit zumindest einer konzentrisch zum Kreisring der Seitenwandschale als Kreisringabschnitt ausgebildeten Aussparung versehen ist, in die ein zur Aussparung komplementär ausgebildeter Einsatz auswechselbar und derart eingesetzt ist, dass er eine mit der Formfläche einheitliche Basisfläche aufweist, auf welcher als Vertiefungen oder Erhebungen ausgebildete Zeichen eingebracht sind, die auf die Seitenwand übertragbar sind. Die Erfindung betrifft ferner einen Einsatz zum Einsetzen in eine als Kreisringabschnitt ausgebildete Aussparung auf einer in Draufsicht kreisringförmigen Seitenwandschale einer Vulkanisationsform für einen Zweiradreifen, insbesondere einen Fahrradreifen oder ein E-Bike und Reifen für Fahrzeuge der Klassen L1e-A und L1e-B,
wobei der Einsatz als zur Aussparung komplementärer Kreisringabschnitt ausgebildet ist und an einer Außenfläche als Vertiefungen oder Erhebungen ausgebildete Zeichen aufweist.

Eine derartige, jedoch zum Vulkanisieren eines PKW-Fahrzeugluftreifens vorgesehene Vulkanisationsform und ein derartiger Einsatz sind aus der DE 10 2009 044 800 B4 bekannt. Die Vulkanisationsform weist zwei Seitenwandschalen auf, wobei zumindest eine der Seitenwandschalen mit zwei Aussparungen versehen ist, in die je ein mit der jeweiligen Aussparung komplementär ausgebildeter Wechselstempel auswechselbar angeordnet werden kann. Der eine Wechselstempel ist ein Gravur-Wechselstempel und weist auf seiner Formfläche eine Gravur auf, durch welche Bezeichnungen in die Seitenwand des Fahrzeugluftreifens eingepresst werden. Der zweite Wechselstempel ist ein Folien-Wechselstempel, der derart ausgestaltet ist, dass auf seiner Formfläche eine gestanzte Folie aufleg- und positionierbar ist. Beim Schließen der Vulkanisationsform wird diese Folie auf die Reifenseitenwand des zu vulkanisierenden Reifens abgelegt und mit dieser durch den Vulkanisierprozess fest verbunden. Solche, oft farbige Folien gestatten es, Bezeichnungen auf Seitenwänden auf optisch ansprechende Weise hervorzuheben. Aus der EP 2 162 278 B1 ist eine Vulkanisationsform zum Vulkanisieren eines Reifens bekannt, welche eine obere und untere Seitenwandschale aufweist, wobei zumindest eine dieser Schalen an ihrer der Formkavität zugewandten Innenseite eine kreisringförmig umlaufende Nut aufweist, in welcher ein komplementärer ringförmiger Einsatz abnehmbar eingesetzt ist. Zur Formkavität weist der ringförmige Einsatz eine Formfläche auf, welche graphische Markierungen zum Einprägen auf die Seitenwand des Reifens aufweist, wobei der Einsatz derart gestaltet ist, dass seine Formfläche über die Formfläche der Seitenwandschale übersteht.

Bei Vulkanisationsformen für Zweiradreifen, insbesondere für Fahrradreifen und E-Bikes, ist es üblich, die Seitenwandbeschriftung meist direkt auf den Seitenwandschalen der oberen und unteren Formhälfte durch Gravieren, Fräsen oder Erodieren einzubringen. Darüber hinaus ist es bekannt, für einzelne Beschriftungselemente kleine Wechselstempel mit einem Element der Beschriftung in die Seitenwandschalen einzubringen. Demnach tritt bei solchen Vulkanisationsformen oft das Problem auf, dass Fehler in der
Seitenwandbeschriftung, Änderungen oder Anpassungen der
Seitenwandbeschriftung es erfordern, die Seitenwandschalen zum Formhersteller zu transportieren und dort entsprechend ändern zu lassen.

Der Erfindung liegt somit die Aufgabe zugrunde, eine Vulkanisationsform und einen Einsatz der eingangs genannten Art derart zu gestalten, dass Änderungen oder Anpassungen der Seitenwandbeschriftung auf einfache Weise und ohne nennenswerten Aufwand möglich sind.

Gelöst wird die gestellte Aufgabe erfindungsgemäß mit einer Vulkanisationsform, bei welcher die Aussparung und der Einsatz eine konstante Breite von 5,00 mm 35,00 mm, insbesondere von 7,00 mm bis 15,00 mm, und eine derartige Erstreckungslänge aufweisen, dass sie über einen Zentriwinkel von 60° bis 170° der Seitenwandschale verlaufen.

Die gestellte Aufgabe wird ferner mit einem Einsatz gelöst, welcher eine konstante Breite von 5,00 mm 35,00 mm, insbesondere von 7,00 mm bis 15,00 mm, und eine derartige Erstreckungslänge aufweist, dass der von ihm eingenommene Kreisringabschnitt über einen Zentriwinkel von 60° bis 170° verläuft.

Ein Einsatz gemäß der Erfindung ist daher ein langgestreckter, in Form eines Kreisbogenabschnitt verlaufender streifenförmiger Bauteil, der sich bestens dazu eignet, zumindest den Großteil der an der Seitenwand eines Zweiradreifens wederzugebenden Zeichen bzw. Beschriftungen zu enthalten und auf die Seitenwand zu übertragen. Ein derartiger Einsatz ist einfach und kostengünstig herstellbar und in Folge der auswechselbaren Anbringung an der Seitenwandschale bei Bedarf leicht austauschbar.

Bei einer bevorzugten Ausführung der Vulkanisationsform verlaufen die Aussparung und der Einsatz und daher verläuft auch der Einsatz selbst über einen Zentriwinkel von bis zu 140°, bevorzugt von 90° bis 110°. Diese Winkelbereiche gestatten es, die meisten, ggf. auch alle Zeichen bzw. Beschriftungen am Einsatz anzubringen und gewährleisten darüber hinaus ein unproblematisches Hantieren mit dem Einsatz bei dessen Positionierung an einer Seitenwandschale der Vulkanisationsform.

Bei einer besonders vorteilhaften Ausführungsvariante sind die Zeichen auf der Basisfläche bzw. auf der Außenfläche des Einsatzes für den jeweiligen Zweiradreifen gesetzlich vorgeschriebene und/oder informative Beschriftungen und Bezeichnungen.

Bei einer Breite des Einsatzes im größeren Breitenbereich, also von bis zu 35,00 mm, insbesondere von bis zu 15,00 mm, ist es möglich, die Zeichen auf der Basisfläche bzw. auf der Außenfläche des Einsatzes einzeilig oder zweizeilig auszubilden.

Ein Hantieren beim Einsetzen des Einsatzes in die Aussparung an der Außenwandschale wird ferner dadurch erleichtert bzw. unterstützt, wenn der Einsatz Endkanten aufweist, die nach außen bogenförmig, insbesondere kreisbogenförmig, verlaufen.

Der Einsatz gestattet es ferner, die Zeichen, also Beschriftungen und/oder Bezeichnungen, voneinander in größeren Abständen an der Basisfläche bzw. der Außenfläche auszubilden, alternativ kann die zur Verfügung stehende Erstreckungslänge des Einsatzes möglichst optimal ausgenützt werden. Bevorzugt sind daher die Zeichen in Summe über 15 % bis 95 %, insbesondere über 30 % bis 95 % einer entlang der Mittellinie des Einsatzes ermittelten Erstreckungslänge ausgebildet, wobei diese Zeichen insbesondere gleichmäßig über diese Erstreckungslänge verteilt sind.

Übliche Vulkanisationsformen für Zweiradreifen weisen ferner Entlüftungsbohrungen, gegebenenfalls mit eingesetzten Entlüftungsventilen, nahe der Aussparung bzw. des Einsatzes auf. In diesem Fall ist es von Vorteil, wenn die Entlüftungsbohrungen einen als lichten Abstand ermittelten Mindestabstand zu Aussparungs- bzw. Einsatzkanten von 0,50 mm bis 15,00 mm, bevorzugt von 1,50 mm bis 5,00 mm, je nach den Platzverhältnissen an der Seitenwandschale, aufweisen.

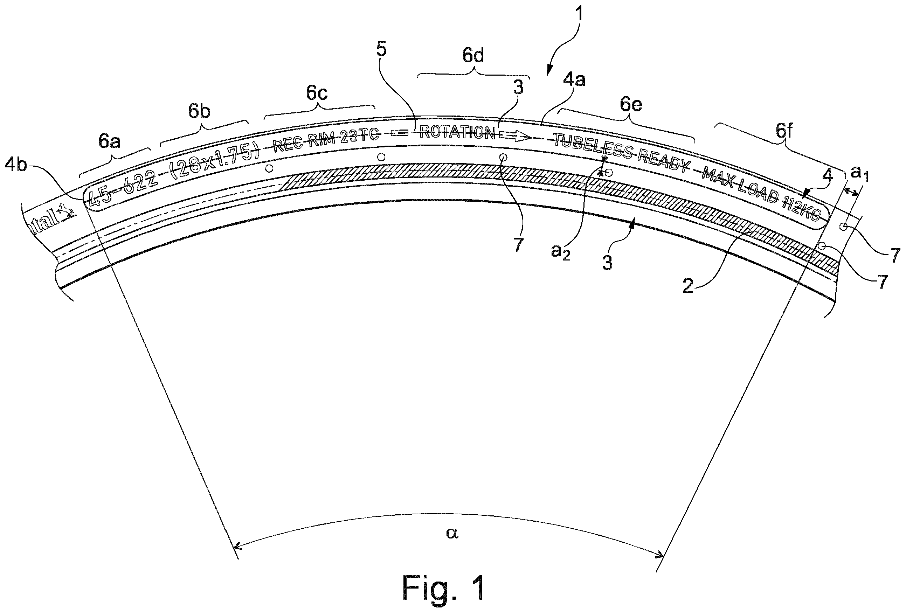

Weitere Merkmale, Vorteile und Einzelheiten der Erfindung werden nun anhand der Zeichnung, die ein Ausführungsbeispiel darstellt, näher beschrieben. Dabei zeigt die einzige Zeichnungsfigur, Fig. 1, einen Umfangsabschnitt einer Seitenwandschale einer Vulkanisationsform zum Ausformen einer der Seitenwände eines Zweiradreifens.

Die Erfindung befasst sich somit mit der Ausgestaltung von Seitenwandschalen einer Vulkanisationsform für Reifen für Zweiräder, insbesondere Fahrräder sowie gemäß der Verordnung EU Nr. 168/2013 des Europäischen Parlaments und des Rates vom 15. Jänner 2013 für Reifen für Fahrzeuge der Klassen L1e (leichtes zweirädriges Kraftfahrzeug), mit den Unterklassen L1e-A (Fahrräder mit Antriebssystem) und L1e-B (zweirädrige Kleinkrafträder).

Fig. 1 zeigt einen Umfangsabschnitt einer Seitenwandschale 1 einer Vulkanisationsform für einen Zweiradreifen, im Beispiel für einen Fahrradreifen. Die in axialer Richtung bewegbar angeordneten Seitenwandschalen kontaktieren bei geschlossener Vulkanisationsform den zu vulkanisierenden Reifen an den Seitenwänden und übertragen auf diesen Bezeichnungen, Dekorelemente und dergleichen. Der dargestellte Umfangsabschnitt verläuft über einen Zentriwinkel von rund 70°. Am radial inneren Bereich verläuft bei der gezeigten Ausführung über den Umfang der Seitenwandschale 1 ein Dekorring 2 mit einem ein- oder aufgeprägten Dekor. Radial außerhalb des Dekorringes 2 weist die Seitenwandschale 1 zumindest einen Umfangsabschnitt mit einer glatten oder weitgehend glatten Formfläche 3 auf, in welcher eine Aussparung ausgebildet ist, in die ein Einsatz 4 eingesetzt ist. Bei einer bevorzugten Ausführung weist der Seitenwandschale 1 zwei um 180° versetzte Aussparungen mit je einem eingesetzten Einsatz 4 auf. Die Seitenwandschale 1 und jeder Einsatz 4 sind metallische Bauteile, insbesondere aus Stahl, der Einsatz 4 besteht vorzugsweise aus einem Stahlblech.

Der Einsatz 4 ist auf austauschbare bzw. entnehmbare Weise in die Aussparung eingesetzt, indem er beispielsweise von der Rückseite der Seitenwandschale 1 auf nicht gezeigte Weise mittels Schrauben befestigt ist. Die Aussparung und der komplementär zu dieser gestaltete Einsatz 4 sind in Draufsicht auf die Seitenwandschale 1 langestreckt und konzentrisch zur Kreisringgestalt der Seitenwandschale 1 ausgebildet. Der Einsatz 4 weist daher zwei konzentrisch zueinander und entlang von Kreisbogenabschnitten verlaufende lange Seitenkanten 4a auf, die endseitig über Endkanten 4b miteinander verbunden sind, die nach außen gebogen und insbesondere ebenfalls entlang von Kreisbogenabschnitten verlaufen. Der Einsatz 4 weist eine äußere, der Formkavität der Vulkanisationsform zugewandte und insbesondere glatte Basisfläche 5 auf, die bei eingesetztem Einsatz 4 mit der umgebenden Formfläche 3 der Seitenwandschale 1 einheitlich bzw. fluchtend verläuft.

Auf der Basisfläche 5 des Einsatzes 4 befinden sich vorzugsweise einzeilig Zeichen, insbesondere die den jeweiligen Reifen kennzeichnenden und zumindest teilweise gesetzlich vorgeschriebenen informativen Bezeichnungen. In Fig. 1 sind aufeinander folgende Positionen 6a bis 6f bezeichnet, wobei im Beispiel an der Position 6a die Reifendimension, an der Position 6b die Felgendimension, an der Position 6c eine weitere Information über die zu verwendende Felge, an der Position 6d die Abrollrichtung bei Vorwärtsfahrt, welche bei der Montage des Reifens zu berücksichtigen ist, an der Position 6e die Information, ob es sich um einen schlauchfreien oder um einen mit Innenschlauch zu verwendenden Reifen handelt, und an der Position 6f die maximal zulässige Belastung.

Mögliche Beschriftungselemente/Bezeichnungen sind daher insbesondere: Brandname, Reifengröße gemäß ETRTO, Reifengröße in Inch, Reifengröße auf Französisch, Recommended Rim Type and Width, Foldable/Non-Foldable, Tyre Type: Tubeless(TL) / Tubeless Ready (TLR) / Tube Type, Minimal Inflation, Maximal Inflation, Maximal Recommended Test Inflation, Maximal Inflation in Crotched Type Rims and Rim Type, Maximal Inflation in Straight Side Rims and Rim Type, Safety Warning: Mount Only on Hooked Rim auf Deutsch und Englisch; Ration, Made in "Country of Origin", Permitted Rim Range, Plant, Datum Code, Interne Mold Nummer, ECE E4 Approval Mark & Nummer für ECE-R88 und ECE-R75, Category of Use, Tire Size mit Aspect Ratio, Load und Speed Index, Load Carrying Capacity in kg, Ply Rating inkl. Material, Tread Pattern Nummer.

Die Beschriftungen am Einsatz 4 sind bevorzugt eingeprägt, also gegenüber der Basisfläche 5 vertieft, sodass sie am vulkanisierten Reifen als Erhebungen ausgebildet sind. Bei einer alternativen Ausführung sind die Beschriftungen am Einsatz 4 gegenüber der Basisfläche 5 erhaben ausgebildet, sodass sie am vulkanisierten Reifen als Vertiefungen ausgebildet sind.

Der Einsatz 4 weist eine konstante Breite von 5,00 mm bis 35,00 mm insbesondere von 7,00 mm bis 15,00 mm, auf. Der Einsatz 4 weist ferner eine Erstreckungslänge auf, die derart gewählt ist, dass der Einsatz 4 an der Seitenwandschale 1 über einen Zentriwinkel α von 60° bis 170°, insbesondere von bis zu 140°, bevorzugt von 90° bis 110°, verläuft. Entlang seiner in Bogenform verlaufenden Mittellinie m beträgt die Erstreckungslänge des Einsatzes 4 80,00 mm bis 970,00 mm, bevorzugt 100,00 mm bis 550,00 mm, insbesondere bis 360,00 mm,

Entlüftungsbohrungen bzw. Entlüftungsventile 7 (in Fig. 1 nur angedeutet) zur Entlüftung der Vulkanisationsform während des Einformens des Reifens werden in Abständen zu den Seitenkanten 4a und den Endkanten 4b vorgesehen. Der lichte Abstand a₁ zwischen Entlüftungsventilen 7 und den Endkanten 4b beträgt 0,50 mm bis 15,00 mm, bevorzugt 1,50 mm bis 5,00 mm, der lichte Abstand a₂ zwischen Entlüftungsventilen und den Seitenkanten 4b ebenfalls 0,50 mm bis 15,00 mm, bevorzugt 1,50 mm bis 5,00 mm. Die lichten Abstände zwischen in Umfangsrichtung aufeinander folgenden und radial innerhalb oder radial außerhalb des Einsatzes 4 befindlichen Entlüftungsventilen 7 betragen 50,00 mm bis 200,00 mm, insbesondere 80,00 mm bis 120,00 mm, je nach der Erstreckungslänge des jeweiligen Einsatzes 4.

Bei einer alternativen Ausführung sind die Beschriftungen am Einsatz 4 auf zwei Zeilen verteilt. Die Beschriftungen am Einsatz 4 erstrecken sich in Summe über 15% bis zu 95% der Erstreckungslänge, insbesondere 30% bis 95%, des Einsatzes 4, wobei die unterschiedlichen Beschriftungen gleichmäßig über die vorhandene Erstreckungslänge verteilt sind und auch größere Abstände zueinander aufweisen können.

### Bezugszeichenliste

- 1: Seitenwandschale
- 2: Dekorring
- 3: Formfläche
- 4: Einsatz
- 4a: Seitenkante
- 4b: Endkante
- 5: Basisfläche
- 6a bis 6f: Positionen von Beschriftungen
- 7: Entlüftungsventil
- α: Zentriwinkel
- a₁, a₂: Abstand
- m: Mittellinie

## Patentansprüche

1. Vulkanisationsform für einen Zweiradreifen, insbesondere einen Fahrradreifen oder ein E-Bike und Reifen für Fahrzeuge der Klassen L1e-A und L1e-B, mit zumindest einer in Draufsicht kreisringförmigen Seitenwandschale (1), deren Formfläche (3) eine Seitenwand des zu vulkanisierenden Reifens formt und welche mit zumindest einer konzentrisch zum Kreisring der Seitenwandschale (1) als Kreisringabschnitt ausgebildeten Aussparung versehen ist, in die ein zur Aussparung komplementär ausgebildeter Einsatz (4) auswechselbar und derart eingesetzt ist, dass er eine mit der Formfläche (3) einheitliche Basisfläche (5) aufweist, auf welcher als Vertiefungen oder Erhebungen ausgebildete Zeichen eingebracht sind, die auf die Seitenwand übertragbar sind,
**dadurch gekennzeichnet,**
**dass** die Aussparung und der Einsatz (4) eine konstante Breite von 5,00 mm 35,00 mm, insbesondere von 7,00 mm bis 15,00 mm, und eine derartige Erstreckungslänge aufweisen, dass sie über einen Zentriwinkel (α) von 60° bis 170° der Seitenwandschale (1) verlaufen.

2. Vulkanisationsform nach Anspruch 1, **dadurch gekennzeichnet, dass** die Aussparung und der Einsatz (4) über einen Zentriwinkel (α) von bis zu 140°, bevorzugt von 90° bis 110°, verlaufen.

3. Vulkanisationsform nach Anspruch 1 oder 2, **dadurch gekennzeichnet, dass** die Zeichen auf der Basisfläche (5) des Einsatzes (4) für den jeweiligen Zweiradreifen gesetzlich vorgeschriebene und/ oder informative Beschriftungen und Bezeichnungen sind.

4. Vulkanisationsform nach einem der Ansprüche 1 bis 3, **dadurch gekennzeichnet, dass** die Zeichen auf der Basisfläche (5) des Einsatzes (4) einzeilig oder zweizeilig ausgebildet sind.

5. Vulkanisationsform nach einem der Ansprüche 1 bis 4, **dadurch gekennzeichnet, dass** die Aussparung und der Einsatz (4) stirnseitig Endkanten aufweisen, die nach außen bogenförmig, insbesondere kreisbogenförmig, verlaufen.

6. Vulkanisationsform nach einem der Ansprüche 1 bis 5 mit Entlüftungsbohrungen (7), ggf. mit eingesetzten Entlüftungsventilen, nahe der Aussparung bzw. des Einsatzes (4),
**dadurch gekennzeichnet,**
**dass** diese Entlüftungsbohrungen (7) einen als lichten Abstand (a₁, a₂) ermittelten Mindestabstand zu Aussparungs- bzw. Einsatzkanten (4a, 4b) von 0,50 mm bis 15,00 mm, bevorzugt von 1,50 mm bis 5,00 mm, aufweisen.

7. Vulkanisationsform nach einem der Ansprüche 1 bis 6, **dadurch gekennzeichnet, dass** die Zeichen am Einsatz (4) in Summe über 15 % bis zu 95 %, insbesondere über 30% bis 95%, einer entlang der Mittelinie des Einsatzes (4) ermittelten Erstreckungslänge des Einsatzes (4) ausgebildet sind, wobei sie gleichmäßig über die Erstreckungslänge verteilt sind.

8. Einsatz (4) zum Einsetzen in eine als Kreisringabschnitt ausgebildete Aussparung auf einer in Draufsicht kreisringförmigen Seitenwandschale (1) einer Vulkanisationsform für einen Zweiradreifen, insbesondere einen Fahrradreifen oder ein E-Bike und Reifen für Fahrzeuge der Klassen L1e-A und L1e-B,
wobei der Einsatz (4) als zur Aussparung komplementärer Kreisringabschnitt ausgebildet ist und an einer Außenfläche als Vertiefungen oder Erhebungen ausgebildete Zeichen aufweist,
**dadurch gekennzeichnet,**
**dass** der Einsatz (4) eine konstante Breite von 5,00 mm 35,00 mm, insbesondere von 7,00 mm bis 15,00 mm, und eine derartige Erstreckungslänge aufweisen, dass der von ihm eingenommene Kreisringabschnitt über einen Zentriwinkel (α) von 60° bis 170° verläuft.

9. Einsatz (4) nach Anspruch 8, **dadurch gekennzeichnet, dass** er über einen Zentriwinkel (α) von bis zu 140°, bevorzugt von 90° bis 110°, verläuft.

10. Einsatz (4) nach Anspruch 8 oder 9, **dadurch gekennzeichnet, dass** die Zeichen auf seiner Außenfläche für den jeweiligen Zweiradreifen gesetzlich vorgeschriebene und/ oder informative Beschriftungen und Bezeichnungen sind.

11. Einsatz (4) nach einem der Ansprüche 8 bis 10, **dadurch gekennzeichnet, dass** die Zeichen auf seiner Außenfläche einzeilig oder zweizeilig ausgebildet sind.

12. Einsatz (4) nach einem der Ansprüche 8 bis 11, **dadurch gekennzeichnet, dass** er Endkanten aufweist, die nach außen bogenförmig, insbesondere kreisbogenförmig, verlaufen.

13. Einsatz (4) nach einem der Ansprüche 8 bis 12, **dadurch gekennzeichnet, dass** die Zeichen in Summe über 15 % bis zu 95 %, insbesondere über 30% bis 95%, einer entlang seiner Mittellinie ermittelten Erstreckungslänge ausgebildet sind, wobei sie insbesondere gleichmäßig über die Erstreckungslänge verteilt sind.
